# EUROPÄISCHE PATENTANMELDUNG

(11) **EP 1 319 882 A2**
(43) Veröffentlichungstag der Anmeldung: **18.06.2003**
(21) Anmeldenummer: 02406049.3
(22) Anmeldetag: 03.12.2002
(51) Int. Cl.: F16L 37/084

(54) **Schlauchverschlusskupplung**

(30) Priorität: 11.12.2001 DE 10160805
(71) Anmelder: HILTI Aktiengesellschaft, 9494 Schaan (LI)
(72) Erfinder: Ohlendorf, Oliver, 80686 München (DE)
(74) Vertreter: Wildi, Roland

(57) **Zusammenfassung**

Eine Kupplung (1) für Schläuche (2) mit zwei rohrförmigen, dichtend koaxial ineinandersteckbaren Kupplungsteilen (3a, 3b) und einem Verriegelungselement (4) mit mehreren, mit dem ersten Kupplungsteil (3a) in Verbindung stehenden, Verriegelungsklinken (5a, 5b), welche in eine Vertiefung (6) des im zweiten Kupplungsteiles (3b) angeordneten Verbindungsbereiches einrückbar sind, wobei die Verriegelungsklinken (5a, 5b) einstückig mit dem ersten Kupplungsteil (3a) verbunden sind.

## Beschreibung

Die Erfindung bezeichnet eine manuell lösbare Verschlusskupplung für Schläuche, insbesondere für Staubabsaugschläuche bei Handwerkzeuggeräten wie Handschleifgeräten.

Üblicherweise bestehen Kupplungen für Schläuche aus zwei rohrförmigen, dichtend koaxial ineinandersteckbaren Kupplungsteilen, welche über ein Verriegelungselement in dieser Position axial festlegbar sind.

Nach der EP0140995B1 ist das Verriegelungselement aus einem mit einem ersten Kupplungsteil in Verbindung stehenden separaten Klinkenring mit mehreren radial elastischen Verriegelungsklinken ausgebildet, welche mit Hilfe einer axial versetzbaren Verriegelungshülse formschlüssig in eine umlaufende Vertiefung an der Aussenkontur des im zweiten Kupplungsteiles gehörenden Verbindungsbereiches einrückbar sind. Nachteilig, da technologisch aufwendig, ist das in Form des Klinkenringes notwendige zusätzliche Teil.

Die Aufgabe der Erfindung besteht in der technologisch einfachen Realisierung einer manuell lösbare Verschlusskupplung für Schläuche.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist eine Kupplung für Schläuche zwei rohrförmige, dichtend koaxial ineinandersteckbare Kupplungsteile und ein Verriegelungselement mit mehreren, mit einem ersten Kupplungsteil in Verbindung stehenden, Verriegelungsklinken auf, welche in eine Vertiefung des im zweiten Kupplungsteiles angeordneten Verbindungsbereiches einrückbar sind, wobei die Verriegelungsklinken einstückig mit dem ersten Kupplungsteil verbunden sind.

Durch die einstückige Verbindung der Verriegelungsklinken mit dem ersten Kupplungsteil, bspw. in Form eines Spritzgussprodukts aus Kunststoff, wird bei der Herstellung ein Teil weniger benötigt, was technologisch einfacher ist.

Vorteilhaft sind die Verriegelungsklinken in Richtung der Vertiefung radial federnd vorgespannt ausgeführt, wodurch die Kupplung selbsttätig verriegelnd ist.

Vorteilhaft ist die Vertiefung umlaufend ausgebildet, wodurch bezüglich der Kupplung ein Rotationsfreiheitsgrad besteht, welcher einer Verdrillung des Schlauches entgegenwirkt.

Vorteilhaft ist das Verriegelungselement im radial äusseren Bereich der Kupplungsteile angeordnet, wodurch der Schlauchinnendurchmesser ohne Querschnittsänderung durch die Kupplung geleitet werden kann, wodurch Verwirbelungen, welche zu einem Druckabfall und zu Staubablagerungen führen, vermieden werden.

Vorteilhaft ist die umlaufende Vertiefung als eine Innennut eines radial äusseren, kupplungsseitig offenen Ringkranzes ausgeführt, in welche die nach radial aussen federnd vorgespannten radial elastischen Verriegelungsklinken selbsttätig formschlüssig einrückbar sind, wodurch die Kupplung durch radialen Druck auf die Verriegelungsklinken intuitiv entriegelbar ist.

Vorteilhaft sind genau zwei nach radial aussen federnd vorgespannt radial elastische Verriegelungsklinken vorhanden und diametral gegenüberliegend angeordnet, wodurch beide gleichzeitig mit einer Hand zwischen Daumen und Zeigefinger entriegelt werden können.

Vorteilhaft weisen die nach radial aussen federnd vorgespannten radial elastischen Verriegelungsklinken im kupplungsseitigen Endbereich radial aussen Griffflächen auf, welche die intuitive Handhabung beim Öffnen der Kupplung unterstützen.

Vorteilhaft bildet ein Kupplungsteil schlauchseitig ein radial nach aussen abgesetztes Schlauchinnengewinde aus, wodurch gewindeartig geformte Schläuche in das Kupplungsteil einschraubbar sind.

Die Erfindung wird bezüglich eines vorteilhaften Ausführungsbeispiels näher erläutert mit einer Darstellung einer Kupplung für Schläuche.

Nach der Darstellung weist eine offen dargestellte Kupplung 1 für einen Schlauch 2 zwei im Schlauchinnendurchmesser D rohrförmige, dichtend koaxial ineinandersteckbare Kupplungsteile 3a, 3b und ein im radial äusseren Bereich der Kupplungsteile 3a, 3b angeordnetes Verriegelungselement 4 mit zwei diametral gegenüberliegend angeordneten, mit dem ersten Kupplungsteil 3a in Verbindung stehenden, Verriegelungsklinken 5a, 5b auf, welche in eine umlaufende Vertiefung 6 des im zweiten Kupplungsteil 3b angeordneten Verbindungsbereiches einrückbar sind, wobei die Verriegelungsklinken 5a, 5b einstückig mit dem ersten Kupplungsteil 3a federnd verbunden sind. Die umlaufende Vertiefung 6 ist als eine Innennut eines radial äusseren, kupplungsseitig offenen Ringkranzes 7 ausgeführt, in welche die nach radial aussen gegen eine Kraft F federnd vorgespannten radial elastischen Verriegelungsklinken 5a, 5b selbsttätig formschlüssig einrückbar sind und im kupplungsseitigen Endbereich radial aussen Griffflächen 8a, 8b aufweisen. Das Kupplungsteil 3a bildet schlauchseitig ein radial nach aussen abgesetztes Schlauchinnengewinde 9 aus.

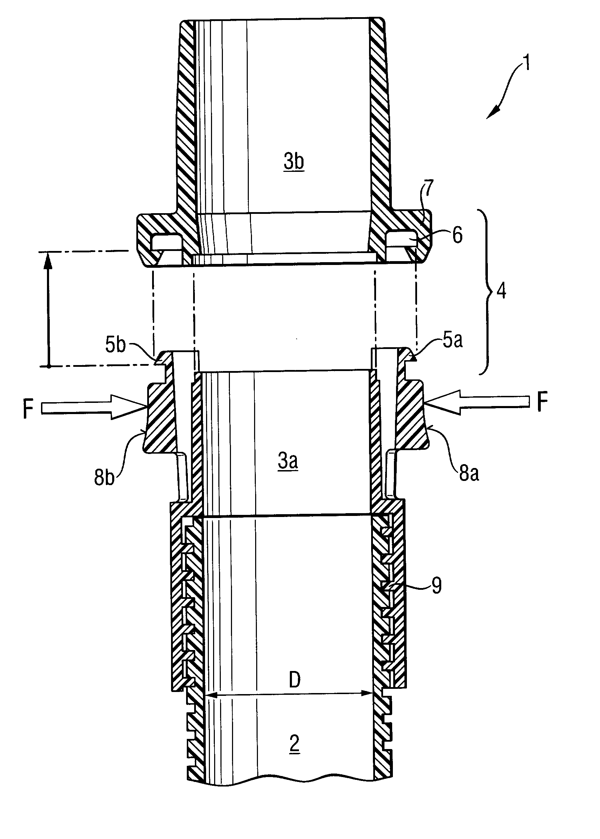

## Patentansprüche

1. Kupplung für Schläuche mit zwei rohrförmigen, dichtend koaxial ineinandersteckbaren Kupplungsteilen (3a, 3b) und einem Verriegelungselement (4) mit mehreren, mit dem ersten Kupplungsteil (3a) in Verbindung stehenden, Verriegelungsklinken (5a, 5b), welche in eine Vertiefung (6) des im zweiten Kupplungsteiles (3b) angeordneten Verbindungsbereiches einrückbar sind, **dadurch gekennzeichnet, dass** die Verriegelungsklinken (5a, 5b) einstückig mit dem ersten Kupplungsteil (3a) verbunden sind.

2. Kupplung nach Anspruch 1, **dadurch gekennzeichnet, dass** die Verriegelungsklinken (5a, 5b) in Richtung der Vertiefung (6) radial federnd vorgespannt ausgeführt sind.

3. Kupplung nach Anspruch 1 oder 2, **dadurch gekennzeichnet, dass** die Vertiefung (6) umlaufend ausgebildet ist.

4. Kupplung nach einem der vorherigen Ansprüche, **dadurch gekennzeichnet, dass** das Verriegelungselement (4) im radial äusseren Bereich der Kupplungsteile (3a, 3b) angeordnet ist.

5. Kupplung nach Anspruch 4, **dadurch gekennzeichnet, dass** die umlaufende Vertiefung (6) als eine Innennut eines radial äusseren, kupplungsseitig offenen Ringkranzes (7) ausgeführt ist, in welche die nach radial aussen federnd vorgespannten radial elastischen Verriegelungsklinken (5a, 5b) selbsttätig formschlüssig einrückbar sind.

6. Kupplung nach Anspruch 5, **dadurch gekennzeichnet, dass** genau zwei nach radial aussen federnd vorgespannt radial elastische Verriegelungsklinken (5a, 5b) vorhanden und diametral gegenüberliegend angeordnet sind.

7. Kupplung nach Anspruch 5 oder 6, **dadurch gekennzeichnet, dass** die nach radial aussen federnd vorgespannten radial elastischen Verriegelungsklinken (5a, 5b) im kupplungsseitigen Endbereich radial aussen Griffflächen (8a, 8b) aufweisen.

8. Kupplung nach einem der vorherigen Ansprüche, **dadurch gekennzeichnet, dass** ein Kupplungsteil (3a, 3b) schlauchseitig ein radial nach aussen abgesetztes Schlauchinnengewinde (9) ausbildet.
